(19) Europäisches Patentamt
European Patent Office
Office européen des brevets

(11) Publication number: **0 196 093**
**B1**

(12) **EUROPEAN PATENT SPECIFICATION**

(45) Date of publication of patent specification: **14.03.90**

(21) Application number: **86104185.3**

(22) Date of filing: **26.03.86**

(51) Int. Cl.⁵: **C 25 D 11/26,** C 25 F 3/08,
C 25 F 3/26, C 23 F 1/26,
C 23 C 16/00, C 01 G 33/00,
C 01 G 35/00 // D01D4/02,
H01G1/10, H01G9/05,
G01T1/00, G21C1/00,
F16K1/00, F17D1/14

(54) **A process for treating an article made of metal selectec from tantalum, niobium and tantalum-niobium alloy.**

(30) Priority: **27.03.85 US 716803**

(43) Date of publication of application:
**01.10.86 Bulletin 86/40**

(45) Publication of the grant of the patent:
**14.03.90 Bulletin 90/11**

(84) Designated Contracting States:
**BE DE FR GB IT NL**

(56) References cited:
**EP-A-0 022 349**
**DD-A- 160 749**
**US-A-3 765 953**
**US-A-4 108 970**

**English translation of Kexue Tongbao , Vol.26.
N.5, pages 268-271 (1981)**

(73) Proprietor: **Zhong, Liu Yu**
**99 Building No. 7 Chen Ge Zhuang**
**Chao Yang District Beijing (CN)**

(72) Inventor: **Zhong, Liu Yu**
**99 Building No. 7 Chen Ge Zhuang**
**Chao Yang District Beijing (CN)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

## Description

Introduction

The present invention relates to a process for treating an article made of a metal selected from tantalum, niobium or tantalum-niobium alloy to improve the wear resistance and surface performance characteristics of the article.

Background

Tantalum is a rare metal discovered in 1802. However, the metal was not widely used until the beginning of the twentieth century when a carbon reduction process was developed to produce sufficiently pure tantalum. Since then tantalum has been applied extensively in electronic, aerospace, chemical, medical and synthetic fiber industries because it has many desirable properties.
thermal conductivity, excellent chemical stability and corrosion resistance. It is not reactive to air or water; and, except for hydrofluoric acid, tantalum is resistant to corrosive attack by strong acids, including aqua regia. Further, tantalum has low surface hardness and yield strength and can be machined easily. Because of these properties, tantalum has been used to make devices, such as: heaters, reactors, pump parts, valve components and measuring devices for use in highly corrosive environments including the presence of strong acids including hydrochloric acid, nitric acid, sulfuric acid and phosphoric acid. However, because of its low hardness and yield strength, the surfaces of tantalum articles are easily scored and distorted. This leads to an undesirably short operating life.

Many methods have been developed to eliminate this problem. For example GB—A—702,936 describes heat treating bored tantalum spinnerets in nitrogen or carbon monoxide to improve the surface hardness. However, this treatment also changed the surface of the spinneret leading to increased blockages while spinning. It has also been suggested that the thickness of the spinneret should be increased. However, increased thickness means longer spinning passages and reduced fiber properties. US—A—4,054,468 describes a process wherein stainless steel or tantalum alloy is bonded explosively to pure tantalum to form a spinneret with better yield strength than a pure tantalum spinneret of the same thickness. The surface hardness of the spinneret can also be improved by heat treatment in nitrogen. These improvements failed to provide a tantalum spinneret to replace the expensive gold-platinum or gold-platinum-rhodium spinneret used in the synthetic fiber industry.

The surface properties of tantalum may be improved by coating with a film of tantalum oxide ($Ta_2O_5$). The tantalum oxide film coating improves further the chemical stability and insulation performance of tantalum. Tantalum articles so coated are useful for high-quality tantalum capacitors. The tantalum oxide film is formed by anodization of the surface of tantalum metal. However, the maximum thickness of the tantalum oxide film is limited to about 2 μm, independent of anodization time. Moreover, the breakdown voltage is only about 100 to 200 volts and is unsatisfactory for applications where a higher breakdown voltage resistance is required.

In *Kexue Tongbao*, Vol. 26, No. 5, pp. 268—271 (1981), an electrochemical process for preparing lithium tantalum oxide coating was described. The process provides a simple and useful process for making very thin crystal chips for use as pyroelectric detectors. In this process, a foil of tantalum, about 2.5 μm to 5 μm thick, was placed in molten lithium nitrate. An anodic voltage of 15 to 25V was applied at 440 to 580°C for about 7 hours to form a polycrystalline lithium tantalum oxide layer, about 7 μm to 14.5 μm thick, wherein the crystals have a preferred orientation.

None of these methods provide tantalum articles with sufficiently improved wear resistance and surface electrical properties. The same problems exist with niobium and tantalum-niobium alloy articles.

On the other hand, DD—A—160 749 discloses forming a tantalum oxide layer on a pure tantalum substrate or on a tantalum alloy by anodic oxidation in an aqueous electrolyte.

Further "Ullmanns Encyklopädie der technischen Chemie" 4, Auflage, Band 17, page 304 (1979) discloses forming niobium pentoxide on niobium by oxygen at temperatures above 600°C.

EP—A—0022349 discloses the protection of a tantalum surface by preoxidising, such as flaming or heating tantalum in an oxidising atmosphere.

Finally, oxide layers of Nb or of Nb, Mi, where Mi is a metal constituting an alloy of Nb, used as protective layers are disclosed in US—A—3 765 953.

It is, therefore, an object of the present invention to provide a process for treating an article made of a metal selected from tantalum, niobium and tantalum niobium alloy to improve the surface performance, including hardness, yield strength, elasticity, high voltage breakdown resistance and other desired physical and electrical properties.

Brief summary of the invention

Said object is achieved according to a process for treating an article made of a metal selected from tantalum, niobium, and tantalum-niobium alloy, to form a film containing oxide of the metal of the article comprising:

a) cleaning and etching the surfaces of the metal article to remove surface impurities;

b) immersing the cleaned article in a bath of an oxygen containing inorganic salt of lithium at a high temperature in the range of 430°—580°C, and

c) applying an anodic voltage in the range of about 3 to 40 V to maintain a current density of about 2 to 20 mA/cm$^2$ for a period of about 0.1 to 10 hours to form said film on the surface on the article, characterized in that the product of said process is an article having a substrate of said metal with said film coated thereon and in that the product is aged at a temperature of 170 to 400°C to eliminate any unbalanced charge in the film coating.

According to the present invention an article of tantalum, niobium or tantalum-niobium alloy is produced with a rigid, thick film of polycrystalline oxygen containing lithium compounds of tantalum, niobium or their mixture respectively. Such articles have improved surface properties including improved wear resistance, yield strength, voltage breakdown resistance and improved elasticity. In the case of a tantalum article, the rigid, thick film of polycrystalline oxygen containing lithium compounds of tantalum comprises a layer of lithium tantalum oxide in a preferred [110] crystal orientation on the outside and a layer of tantalum oxide on the inside bonded to the tantalum article. The structure of the film is similar, in the case of niobium or niobium-tantalum alloy articles except that tantalum is replaced with niobium or a mixture of tantalum and niobium.

The treated tantalum article has a Vickers diamond hardness of $H_v$ 700, improved elasticity, strength, distortion resistance, higher efficiency and a much longer operating life.

When a tantalum spinneret, treated in accordance to the present invention, is used, not only is the operating life increased, surprisingly, the quality of the spun fiber is also improved. Further, tantalum wires or foils treated in accordance to the present invention are useful as elastic or spring elements.

It has further been found that the film formed on the surface of the tantalum article is a good insulator and has high voltage breakdown resistance and can, therefore, be used as a substrate of a thin film thermal detector.

Detailed description of the invention

The article may be cleaned by conventional methods including dusting and washing with oil removing solvents such as acetone. The article may also be soaked in strong acid to remove imbedded impurities present in the surface of the metal article. These impurities are imbedded into the tantalum surface usually as a result of machining. During electric spark machining, cutting, extruding and other like processing, localized high temperature spots are generated. The high temperature spots may cause metal impurities from processing tools to be bonded to or even form an alloy with tantalum. These impurities are difficult to be removed even by soaking in strong acids.

In such circumstances, further etching with hydrofluoric acid including electrochemical etching is necessary to produce a thick, rigid film on the surface of the tantalum article without cracking or shedding of the film. The speed of etching varies with the material of the article and the etching conditions used. If all conditions are the same, the amount of etching depends on the etching time. When completed, the surface of the etched article becomes smooth and has a high finish. Further, electrochemical etching can be used to enlarge the diameter of the capillary bores in a spinneret.

The etchant was composed of 40% to 48% HF (by weight), 65% to 68% $HNO_3$ (by weight) and distilled water, $HF:HNO_3:H_2O=10:10:35$ by volume. The temperature range was controlled at 35°C to 45°C with an applied anodic voltage in the range of 1 volt to 5 volts.

An example of a suitable etching solution consists of a mixture of concentrated hydrofluoric acid (40% by weight), concentrated nitric acid (65% by weight), and distilled water. A tantalum spinneret was treated in this etching solution at 39°C±1°C with an applied anodic voltage of 2.5 volts for 7 minutes. The voltage changed periodically and the voltage of 2.5 volts was referred to the highest value. The results show that all surface impurities have been removed and the average diameter of the capillary bores of the tantalum spinneret was enlarged by about 2 μm.

The other etchant was composed of 40% to 48% HF and $H_2SO_4$ with a specific weight of 1.84, $HF:H_2SO_4=1:9$ by volume. The temperature range was controlled at 35°C to 45°C with an applied voltage in the range of 7 volts to 13 volts with platinum and tantalum or niobium as cathode and anode, respectively. For example, using this etchant, the cathode and anode were platinum and tantalum spinneret, respectively. The temperature of the solution was controlled at 39°C±1°C with an applied voltage of 10 volts for 4 minutes. As a result, the capillary bores of the spinneret would be expanded by about 2 μm. This process makes it possible to get the improved finish, but it is difficult to clean the articles clearly.

The molten oxygen containing inorganic lithium salt may be some oxygen containing inorganic lithium salt, a mixture of some oxygen containing inorganic lithium salt and lithium hydroxide or a mixture of some oxygen containing inorganic lithium salt and the other oxygen containing inorganic salt. Pure lithium nitrate shows a high degree of activity in the electrochemical reaction step. For example, the addition of potassium nitrate to lithium nitrate lowers the melting point of lithium nitrate to about 150°C and increases the flashing voltage of the melt so that a higher anodic voltage may be applied in the electrochemical reaction step. The addition of lithium hydroxide to lithium nitrate raises the boiling point of lithium nitrate and permits the use of a higher temperature in the electrochemical reaction step.

The conditions of the electrochemical reaction may be varied to meet different requirements.

If the temperature is increased, the degree of preferred orientation of the [110] plane of the polycrystalline lithium tantalum oxide containing film decreases, the crystal grain of the resulting film is rough and the surface finish decreases and the surface characteristics of tantalum articles is modified to a greater degree. If the applied anodic voltage is increased, the rate of film formation increases, the degree of preferred orientation of polycrystalline lithium tantalum oxide containing film increases. The resulting film is also more compact with less lattice imperfection and has better insulating properties.

The maximum anodic voltage is limited by the material of the articles and the flashing voltage of the melt, which decreases as the temperature of the melt is increased. All other conditions being the same, the thickness of the film formed depends on the time of the electrochemical reaction.

It is noted that for a set temperature, the applied current density must be sufficiently high. If the current density is below that required, the rate of the electrochemical reaction is very slow and consequently, the rate of film formation is very slow. If the current density is too high, however, there are localized increases in temperature and this presents a problem in controlling the temperature of the electrochemical reaction. It has been found that the following conditions are suitable for treating tantalum articles: the temperature of the melt should be in the range of about 430°C to 580°C, the applied anodic voltage should be about 3 volts to 40 volts and the current density should be between about 2 to 20 mA/cm$^2$.

If higher melt temperatures are used, it has been found that no anodic voltage need be applied and a film will be formed as a result of chemical reaction alone. However, the rate is very slow. Further, there are many defects in the lattice of the polycrystals and the crystals have poor compactness and modified performance with no preferred orientation.

X-ray analysis of the electrochemical process shows that tantalum is first converted to tantalum oxide and then to polycrystalline lithium tantalum oxide. As long as there is pure tantalum, the conversion of tantalum oxide to lithium tantalum oxide is not complete. A phase diagram can be drawn to represent the tantalum-tantalum oxide-lithium tantalum oxide system.

Except for edges and corners, the film formed from the electrochemical reaction is uniform on the various surfaces of the tantalum article including the inner surface of the capillary bores of a spinneret. However, the edges and corners have slightly inferior insulating properties compared with the other surfaces of the film covered article.

In a preferred embodiment, the temperature of the melt is controlled first at above 500°C with an applied anodic voltage in the range of about 3 volts to 30 volts for about 0.01 to 10 hours to produce a relatively thick film. The higher the temperature is, the lower the applied voltage is. The reaction condition is then changed: the temperature of the melt is lowered to about 440°C to 460°C, the applied anodic voltage is increased to above 35 volts to produce another layer of film. This produces a relatively thin film with a high degree of packing and preferred orientation. It has low dielectric loss, better insulating performance and higher voltage breakdown resistance.

Alternatively, the reaction conditions employed may be: a temperature of about 440°C to 460°C, an applied anodic voltage of about 30 volts to 40 volts and then increasing the temperature to above 500°C with an applied voltage in the range of about 3 volts to 30 volts.

The reaction conditions may also be repeatedly alternated to produce a multilayer films.

After electrochemical treatment, the article should be cleaned and post-treated to eliminate any unbalanced charge in the film coating. This may be by aging it at a temperature of about 170°C to 400°C.

Or, if the film is to be used for insulation purposes, the film coated article before its heat treating should be placed in a phosphoric acid solution under an applied anodic voltage for a period of time to intensify the film's insulating performance. For example, the film coated article may be placed in a 1:2 mixture by volume of dilute phosphoric acid (0.05% by weight) and ethylene glycol at a temperature of about 90°C±5°C with an applied anodic voltage of about 500 volts to 600 volts for about 2 to 3 hours. Then it may be placed in dilute phosphoric acid (0.01% by weight) at room temperature with an applied anodic voltage of about 350 volts for about one hour.

After post-treatment, the film is firmly bonded to the surface of the tantalum article.

Articles treated in accordance with the present invention have significantly improved surface hardness. For comparison purposes, pure tantalum has a surface hardness of about 120 to 140 H$_v$ (H$_v$ is Vickers hardness), after heat treatment the tantalum surface hardness is about 300 H$_v$. Tantalum articles treated in accordance with the present invention have a maximum surface hardness of about 700 H$_v$. If the film coating is removed by grinding and polishing, the hardness of the underlying tantalum layer is found to be increased to about 400 to 600 H$_v$. Even after further grinding of the tantalum article, the surface hardness is higher than of unprocessed tantalum.

It is also found that film coated tantalum metal treated according to the present invention has increased elasticity, yield strength and decreased ductility. It is evident that the tantalum layer is altered by the process. The thickness of this altered layer depends on the reaction conditions, such as temperature, applied voltage and reaction time.

A tantalum foil with a thickness of 0.1 mm was treated at 520°C in molten lithium nitrate with an applied anodic voltage of 10 volts for one hour. The elasticity of the treated foil was compared with untreated tantalum foil. The results are presented in Table I below. The measurements were made according to Journal of Instrument Materials, Vol. 13, No. 1, pp. 27—34 (1982).

## TABLE I
### Elasticity

| | $\sigma\ 0.002^{a)}$ Kg/mm$^2$ | $\sigma\ 0.005^{a)}$ Kg/mm$^2$ | $H_y\%^{b)}$ | $Af\%^{c)}$ |
|---|---|---|---|---|
| Processed tantalum foil | 119 | 140 | 0.64 | 0.07 |
| Unprocessed tantalum foil | 48 | 54 | 1.06 | 0.08 |

a) $\sigma\ 0.002$ and $\sigma\ 0.005$=ultimate bending elasticity;
b) $H_y$=elastic hysteresis;
c) $Af$=elastic after-effect.

Both $H_y$ and $Af$ were measured at a maximum stress of 47 Kg/mm$^2$.

The measurements were made according to ASTM standard $E_8$-79 using the tantalum foil small specimens, 0.2 mm thick, which were treated at 520°C in lithium nitrate with an applied anodic voltage of 15 volts for 2.5 hours. The tensile strength and the elongation were 96 Kg to 103 Kg/mm$^2$ and 1.2%, respectively.

The dielectric constant of the film coating varies with the reaction conditions, usually in the range of about 25 to 35. The resistivity of the film coating is from about $10^{11}$ to $10^{13}$ ohm cm. The dielectric loss decreases with increase in frequency and is similar to single crystal lithium tantalate. This is desirable for the production of high frequency low loss capacitors. For a multilayer film produced according to the two different processing conditions the breakdown voltage can be as high as above 1500 volts.

It is further observed that the electrode potential is altered after the tantalum surface is coated with a film in accordance with the present invention. For example, in a coagulation bath solution for spinning rayon staple, wherein the solution contains 124.3 g/l of $H_2SO_4$, 13.2 g/l of $ZnSO_4$ and 333.2 g/l of $Na_2SO_4$, an unprocessed tantalum spinneret is electronegative, while a tantalum spinneret processed in accordance with the present invention is electropositive. The potential varies with the processing conditions and the difference may be as high as +0.256 volts.

In the foregoing it has been mentioned that in accordance with the present invention the electrochemical reaction is made at a temperature of above 430°C in the molten lithium salt. As a result, the tantalum, niobium and tantalum-niobium alloy articles are coated with a desirable film. The process according to the present invention may be desirably compared with the well-known method of anodization wherein a $Ta_2O_5$ film is formed by anodizing in an aqueous solution or non-aqueous organic solution. The difference between them is as follows:

a) When the reaction temperature and the applied anodic voltage are fixed, after applying anodic voltage for a period of time the film thickness of the latter is independent of the anodization time, while the film thickness according to the present invention increases with the time and, therefore, a quite thicker film is formed.

b) The properties of the film underlying tantalum substrate according to the latter are altered hardly, while the properties of the former, such as the hardness, the elasticity and the strength limit are changed significantly.

Tantalum spinnerets processed in accordance to the present invention show improved wear resistance to scoring and distortion. Further, when the difference in temperature between the coagulation solution and the spinning solution is high, the increased heat-insulation provided by the film coating improves the spinning process. Moreover, the film on the exit-face of the spinneret can be ground away to expose pure tantalum. The difference in electropotential of coated and uncoated tantalum significantly reduces the rate of clogging of the capillary bores due to electrostatic attraction during spinning.

A tantalum spinneret was treated in molten lithium nitrate at 520°C, with an anodic voltage of 15 volts for 2 hours. The film coating on the exit-face of the spinneret was removed by grinding and polishing. This spinneret was used to spin rayon staple. Compared to an unprocessed tantalum spinneret, which had 180 clogged capillary bores after 34 hours of spinning, the processed tantalum spinneret has only one clogged bore. Moreover, the breaking strength of the fiber spun by the processed tantalum spinneret was improved. The breaking strength of the fiber produced by an unprocessed tantalum spinneret was 2.6 g/denier, whereas the breaking strength of the fiber produced by the processed tantalum spinneret was 2.8 g/denier.

It is known that pure tantalum has poor elasticity and cannot be used to make an elastic element. However, if tantalum foil or wire is formed into a desired shape and processed according to the present invention, the elasticity of the tantalum article is increased and it can be used as an elastic element in strong acids at high temperatures.

The strength and the surface hardness of the tantalum reactors, pump parts and valve components used in petrochemical industry are relatively low. These articles, according to the present invention, may be coated with a tantalum lithium oxide film, which increases both the strength and the surface hardness significantly. Furthermore, the performance of resistance to scoring and distortion as well as the operating life are improved.

Tantalum metal is an excellent x-ray absorber and should be considered for use as an x-ray sensor. However, tantalum foil coated with tantalum oxide according to known methods, is not suitable for use as a substrate of the sensing element because the voltage breakdown resistance is less than 250 volts and the thermal conductivity is poor. Tantalum foil processed in accordance with the present invention to have a thin film coating does have excellent voltage breakdown resistance and good thermal conductivity; therefore, it is suitable for use as a substrate of the x-ray sensing element. The film coated tantalum sensing element has been found to have rapid response and is useful for measuring high dosages. Moreover, it is suitable for use as a substrate of fast-response thin film thermistors.

Tantalum foils processed in accordance with the present invention are also useful for making high voltage, high frequency tantalum capacitors as their dielectric.

Niobium is also a rare metal having properties similar to tantalum. The film forming process of the present invention is also suitable for niobium and tantalum-niobium alloy articles. Generally, the anodic voltage required is lower, the current density required is higher and the rate of film formation is faster.

The temperature of the molten lithium salt employed is similar to that used for processing tantalum. A suitable temperature range is about 400°C to 520°C. The anodic voltage applied is in the range of about 5 volts to 15 volts and the current density required while increasing voltage is above 20 mA/cm².

The conditions for processing tantalum-niobium alloy articles can be varied in accordance with the ratio of tantalum to niobium.

The following examples illustrate the present invention.

Example 1

A tantalum spinneret, with a diameter of 64 mm and having 7500 capillary bores, each capillary bore having a diameter of 0.104 mm (tolerance +0.004 mm, −0.002 mm), was degreased with acetone and soaked in a cleaning solution at 90°C for 30 minutes.

The spinneret was then removed from the acid solution, rinsed, dried and then placed in an etching solution consisting of a 10:10:35 by volume mixture of hydrofluoric acid (40% by weight), nitric acid (65% by weight) and water at a temperature of 39°C. With the spinneret as the anode and a piece of platinum as the cathode, a voltage of 2.5 volts was applied for 7 minutes.

The cleaned and etched spinneret was rinsed in water and dried and then immersed in a molten lithium nitrate bath at a temperature of 520°C. An applied anodic voltage of 15 volts was held for 2 hours and a current density of 5 mA/cm² was maintained only before increasing the anodic voltage to 15 volts.

The spinneret was removed from the bath. It was observed that a white film had formed on the surface. The diameter of capillary bores was shrunk by about 6 μm.

The film coated spinneret was rinsed and dried. The film on the exit-face of the spinneret was removed by grinding and polished to expose tantalum metal. The spinneret was then heat treated at a temperature of 170°C for about 3 hours.

The hardness of the film was determined to be about 700 H$_v$. The hardness of the exposed tantalum metal was also measured and varied from 400 to 600 H$_v$. The average diameter of the capillary bores was found to be 0.100 mm (+0.004 mm, −0.002 mm). The spinneret was found to be suitable for spinning rayon staple.

The electrochemical reaction time and etching time should be adjusted correspondingly according to the difference between the real diameter of capillary bores and the largest tolerance value to make the diameter of capillary bores more accurate.

Example 2

A tantalum spinneret, with a diameter of 74 mm and having 12,000 capillary bores, each capillary bore having a diameter of 0.06 mm (+0.004 mm, −0.002 mm) was degreased, cleaned and etched as described in Example 1 to enlarge the diameter of the capillary bores in the spinneret by about 2 μm. The spinneret was immersed in a molten lithium nitrate bath at a temperature of 440°C. An applied anodic voltage of 25 volts was held for 3 hours and a current density of 5 mA/cm² was maintained only before increasing the anodic voltage up to 25 volts. The cleaned spinneret was treated at 170°C for 3 hours. The resulting capillary bore diameter was found to be 0.06 mm (+0.004 mm, −0.002 mm). The hardness was about 400 H$_v$. The experimental results show that the rate of clogging capillary bores in a spinneret is less than that of the unprocessed tantalum spinneret.

Example 3

Tantalum wire with a diameter of 1 mm was formed into a spiral, degreased with acetone, soaked at a temperature of 90°C for 30 minutes, and etched as described in Example 1, except that for etching time was increased to above 10 minutes.

The tantalum spiral was rinsed and dried and immersed in a molten lithium nitrate bath maintained at 520°C. An applied anodic voltage of 20 volts was held for 3 hours and a current density of 5 mA/cm² was maintained only before increasing the anodic voltage up to 20 volts with nickel as a cathode. The tantalum spiral was found to be useful as a spring and can be used in strong acids except hydrofluoric acid.

Example 4

Articles used in petrochemical industry such as tantalum reactors, pipe valves and pump parts are treated as described in Example 3.

Example 5

A 0.15 mm thick tantalum sheet was formed into a disc with a diameter of 20 mm. A small tail was left on the disc as a lead for spot welding. The disc was cleaned, soaked and etched for 7 minutes as described in Example 1. After rinsing and drying it was then annealed in high vacuum at 1950°C for 30 minutes and then the lead welded for connection to a power supply.

The disc was then immersed in a bath of molten lithium nitrate maintained at 520°C. An applied anodic voltage of 20 volts was held for 2 hours and a current density of 5 mA/cm² was maintained only before increasing the anodic voltage up to 20 volts. The disc was then immersed in a molten bath of 50:50 (by weight) lithium nitrate and potassium nitrate at a temperature of 440°C. An applied anodic voltage of 40 volts was held for 3 hours and a current density of 3 mA/cm² was held only before increasing the anodic voltage up to 40 volts.

The disc was removed from the bath and cleaned. One side of the disc was coated with paraffin wax to prevent corrosive attack by hydrofluoric acid. The disc coated on one side with paraffin wax was then immersed in an etching solution as described in Example 1 until the film on the side which was not coated with paraffin wax was removed exposing tantalum metal.

The disc was removed from the etching solution and cleaned to remove the paraffin wax and again immersed in the lithium nitrate bath at 520°C. An applied anodic voltage of 15 volts was held for 10 minutes and a current density of 10 mA/cm² was maintained only before increasing the anodic voltage up to 15 volts. The disc was removed and placed in a second lithium nitrate bath at 440°C. An applied anodic voltage was held for 2 hours and a current density of 3 mA/cm² was held only before increasing the anodic voltage up to 30 volts.

The disc was removed and washed to remove any lithium nitrate on the surface. Then it was immersed at room temperature in a solution of 0.01% by weight of phosphoric acid with an applied anodic voltage of 350 volts for 30 minutes. The lead welding was cut away and the film coated disc cleaned and dried. The disc was coated with a thin film on one surface and a thick film on the other surface. The disc can be used as a high dosage x-ray detector.

Example 6

A tantalum sheet 0.1 mm thick, was cut into a square, 10 mm×10 mm, except for a small tail which was left on the square as a lead.

The square was cleaned, soaked and etched as described in Example 5. It was then immersed in a molten lithium nitrate bath at 440°C. An applied anodic voltage of 40 volts was held for 3 hours and a current density of 5 mA/cm² was maintained only before increasing the anodic voltage up to 40 volts.

The square was then placed in a molten lithium nitrate bath at 520°C. An applied anodic voltage of 30 volts was held for 2 hours and a current density of 5 mA/cm² was held only before increasing the anodic voltage up to 30 volts.

The square was again treated in a lithium nitrate bath at 440°C, with an applied anodic voltage of 40 volts for 3 hours.

After this process, the square was washed, dried and placed in a 1:2 by volume mixture of 0.05% by weight phosphoric acid and ethylene glycol at 95°C with an applied anodic voltage of 600 volts for 2 hours. It was then washed with boiling water and placed in 0.01% by weight phosphoric acid at room temperature with an applied anodic voltage of 400 volts for 30 minutes.

After cleaning and drying, nickel-chromium-gold alloy was deposited on one surface of the film coated square as an electrode. The square was then heat treated at 170°C for 3 hours. The square was found to have high voltage breakdown resistance and low loss at high frequencies and was found to be suitable for use as a capacitor. The thickness of the film coating was about 19 μm. At room temperature, the breakdown voltage was over 1000 volts; further, at different frequencies, such as at 1000 Hz, 200 KHz and 1 MHz the loss was $10 \times 10^{-3}$, $6 \times 10^{-3}$ and $4.6 \times 10^{-3}$, respectively.

**Claims**

1. A process for treating an article made of a metal selected from tantalum, niobium, and tantalum-niobium alloy, to form a film containing oxide of the metal of the article comprising:

a) cleaning and etching the surfaces of the metal article to remove surface impurities;

b) immersing the cleaned article in a bath of oxygen containing inorganic salt of lithium at a high temperature in the range of 430°—580°C, and

c) applying an anodic voltage in the range of about 3 to 40 V to maintain a current density of about 2 to 20 mA/cm² for a period of about 0.1 to 10 hours to form said film on the surface on the article,

characterized in that the product of said process is an article having a substrate of said metal with said film coated thereon and in that the product is aged at a temperature of 170 to 400°C to eliminate any unbalanced charge in the film coating.

2. A process according to claim 1, wherein, prior to being aged, said product is immersed in a solution of a mixture of phosphoric acid, ethylene glycol and water at a temperature of about 90±5°C under an applied anodic voltage of about 500 to 600 V for about 2 to 3 hours, to intensify the insulating performance of said film.

3. A process according to claim 2, wherein said product, prior to being aged, is further immersed in dilute phosphoric acid at room temperature under an applied anodic voltage of about 350 to 600 V for up to about 1 hour, to further intensify the insulating performance of said film.

4. A process according to claim 1, wherein the metal article is cleaned by degreasing with an organic solvent and soaking the article in a strong acid.

5. A process according to claim 4, further comprising electrochemical etching in a solution of hydrofluoric acid at an applied anodic voltage to remove impurities imbedded in the surface of the metal article.

6. A process according to claim 1, wherein the oxygen containing inorganic salt of lithium is selected from lithium nitrate, a mixture of lithium nitrate and potassium nitrate and a mixture of lithium nitrate and lithium hydroxide.

7. A process according to claim 1, wherein the temperature of the melt is first controlled at above 500°C, with an applied anodic voltage in the range of about 3 volts to 30 volts for about 0.1 to 10 hours to form a thicker film; then the temperature of the melt is changed to a temperature in the range of 440°C to 460°C, with an applied voltage in the range of about 35 volts to 45 volts for about 2 to 4 hours to form the outer portion of the film.

8. A process according to claim 1, wherein the temperature of the melt is first controlled at about 440°C to 460°C, with an applied anodic voltage in the range of about 35 volts to 45 volts for about 2 to 4 hours and then the temperature of the melt is changed to a temperature above 500°C, with an applied anodic voltage of between about 3 volts to 30 volts for about 0.1 to 10 hours to form the outer portion of the film.

9. A process according to claim 1, wherein said article is a spinneret.

10. A process according to claim 9, wherein the spinneret is made of tantalum, and the process further comprises electrochemical etching the surface of the tantalum spinneret by immersing in a solution containing hydrofluoric acid with an applied anodic voltage to remove a surface layer and enlarge the diameter of the capillary bores in the spinneret and then controlling the temperature of the melt at a temperature in the range of about 430°C to 580°C with an applied anodic voltage in the range of about 3 volts to 40 volts.

11. A process according to claim 10, wherein said electrochemical etching is performed with said solution at about 39°C and with an applied anodic voltage of about 2 to 5 V.

12. A process according to claim 10, further comprising the post-treatment step of removing the film coating on the exit face of the spinneret to eexpose tantalum metal.

13. A process according to claim 2, wherein said article is an elastic element of tantalum.

14. A process according to claim 1, wherein said article is a tantalum capacitor plate having the formed oxide film as its dielectric.

15. A process according to claim 1, wherein said article is a tantalum substrate of an x-ray sensing element or a heat sensing element.

16. A process according to claim 1, wherein said articles are reactors, valve components and pump parts used in petrochemical industry.

**Patentansprüche**

1. Verfahren zur Behandlung eines aus einem unter Tantal, Niob und Tantal-Niob-Legierung gewähltem Metall gefertigten Gegenstandes zur Bildung einer Oxid des Metalls des Gegenstandes enthaltenden Schicht, das aufweist:

a) Reinigen und Ätzen der Oberflächen des Metallgegenstandes zur Beseitigung von Oberflächenverunreinigungen;

b) Eintauchen des gereinigten Gegenstandes in ein Bad eines Sauerstoff enthaltenden anorganischen Lithiumsalzes bei einer hohen Temperatur im Bereich von 420°—580°C; und

c) Anlegen einer anodischen Spannung im Bereich von etwa 3 bis 40 V sur Aufrechterhaltung einer Stromdichte von etwa 2 bis 20 mA/cm$^2$ für eine Dauer von etwa 0,1 bis 10 Stunden zur Bildung der Schicht auf der Oberfläche des Gegenstandes,

dadurch gekennzeichnet, daß das Erzeugnis des Verfahrens ein Gegenstand ist, der ein Substrat des Metalls mit der darauf gebildeten Schicht ist, und daß das Erzeugnis bei einer Temperatur von 170 bis 400°C zur Beseitigung irgendeiner unausgeglichenen Ladung im Schichtüberzug angelassen wird.

2. Verfahren nach Anspruch 1, wobei das Erzeugnis vor dem Anlassen in eine Lösung einer Mischung von Phosphorsäure, Ethylenglykol und Wasser bei einer Temperatur von etwa 90±5°C unter einer angelegten anodischen Spannung von etwa 500 bis 600 V für etwa 2 bis 3 Stunden eingetaucht wird, um das Isolationsvermögen der Schicht zu steigern.

3. Verfahren nach Anspruch 2, wobei das Erzeugnis vor dem Anlassen weiter in verdünnte Phosphorsäure bei Raumtemperatur unter einer angelegten anodischen Spannung von etwa 350 bis 600 V für bis zu etwa 1 Stunde eingetaucht wird, um das Isolationsvermögen der Schicht weiter zu steigern.

4. Verfahren nach Anspruch 1, wobei der Metallgegenstand durch Entfetten mit einem organischen Lösungsmittel und Eintauchen des Gegenstandes in eine starke Säure gereinigt wird.

5. Verfahren nach Anspruch 4, das weiter ein elektrochemisches Ätzen in einer Flußsäurelösung bei einer angelegten anodischen Spannung zur Beseitigung von in der Oberfläche des Metallgegenstandes eingebetteten Verunreinigungen aufweist.

6. Verfahren nach Anspruch 1, wobei das Sauerstoff enthaltende anorganische Lithiumsalz unter Lithiumnitrat, einer Mischung von Lithiumnitrat und Kaliumnitrat und einer Mischung von Lithiumnitrat und Lithiumhydroxid gewählt wird.

7. Verfahren nach Anspruch 1, wobei die Temperatur der Schmelze zunächst auf über 500°C bei einer angelegten anodischen Spannung im Bereich von etwa 3 Volt bis 30 Volt für etwa 0,1 bis 10 Stunden zur Bildung einer dickeren Schicht gesteuert wird und dann die Temperatur der Schmelze auf eine Temperatur im Bereich von 440°C bis 460°C bei einer angelegten Spannung im Bereich von etwa 35 Volt bis 45 Volt für etwa 2 bis 4 Stunden zur Bildung des äußeren Teils der Schicht geändert wird.

8. Verfahren nach Anspruch 1, wobei die Temperatur der Schmelze zunächst auf etwa 440°C bis 460°C bei einer angelegten anodischen Spannung im Bereich von etwa 35 Volt bis 45 Volt für etwa 2 bis 4 Stunden gesteuert wird und dann die Temperatur der Schmelze auf eine Temperatur über 500°C bie einer angelegten anodischen Spannung von zwischen etwa 3 Volt bis 30 Volt für etwa 0,1 bis 10 Stunden zur Bildung des äußeren Teils der Schicht geändert wird.

9. Verfahren nach Anspruch 1, wobei der Gegenstand eine Spinndüse ist.

10. Verfahren nach Anspruch 9, wobei die Spinndüse aus Tantal gefertigt wird und das Verfahren weiter ein elektrochemisches Ätzen der Oberfläche der Tantalspinndüse durch Eintauchen in eine Flußsäure enthaltende Lösung bei einer angelegten anodischen Spannung zur Entfernung einer Oberflächenschicht und Vergrößerung des Durchmessers der kapillaren Bohrungen in der Spinndüse und dann das Steuern der Temperatur der Schmelze auf einer Temperatur im Bereich von etwa 430°C bis 580°C bei einer angelegten anodischen Spannung im Bereich von etwa 3 Volt bis 40 Volt aufweist.

11. Verfahren nach Anspruch 10, wobei das elektrochemische Ätzen mit der Lösung bei etwa 39°C und mit einer angelegten anodischen Spannung von etwa 2 bis 5 V durchgeführt wird.

12. Verfahren nach Anspruch 10, das weiter den Nachbehandlungsschritt der Entfernung des Schichtüberzugs auf der Austrittsfläche der Spinndüse zum Freilegen von Tantalmetall aufweist.

13. Verfahren nach Anspruch 2, wobei der Gegenstand ein elastisches Tantalelement ist.

14. Verfahren nach Anspruch 1, wobei der Gegenstand eine Tantalkondensatorplatte mit der als ihr Dielektrikum gebildeten Oxidschicht ist.

15. Verfahren nach Anspruch 1, wobei der Gegenstand ein Tantalsubstrat eines Röntgenstrahlen-Fühlerelements oder eines Wärmefühlerselements ist.

16. Verfahren nach Anspruch 1, wobei die Gegenstände Reaktionsgefäße, Ventilbestandteile und Pumpenteile sind, die in der petrochemischen Industrie verwendet werden.

**Revendications**

1. Un procédé de traitement d'un article réalisé en un métal choisi parmi le tantale, le niobium et un alliage de tantale-niobium pour former un film contenant un oxyde du métal de l'article, ledit procédé comprenant:

a) le nettoyage et la gravure des surfaces de l'article métallique pour éliminer les impuretés superficielles;

b) l'immersion de l'article nettoyé dans un bain d'un sel inorganique de lithium contenant de l'oxygène à une température élevée comprise dans l'intervalle de 430—580°C, et

c) l'application d'une tension anodique comprise dans l'intervalle d'environ 3 à 40 V pour maintenir une densité de courant d'environ 2 à 20 mA/cm$^2$ pendant une période de temps d'environ 0,1 à 10 h pour former ledit film sur la surface de l'article,

caractérisé en ce que le produit dudit procédé est un article ayant un substrat dudit métal sur lequel est appliqué ledit film et en ce que le produit est vieilli à une température de 170 à 400°C pour éliminer toute charge non équilibrée dans le film de revêtement.

2. Un procédé selon la revendication 1, selon lequel, ayant le vieillissement, ledit produit est immergé dans une solution d'un mélange d'acide phosphorique, d'éthylèneglycol et d'eau à une température d'environ 90±5°C sous une tension anodique appliquée d'environ 500 à 600 V pendant environ 2 à 3 h, pour intensifier la performance isolante dudit film.

3. Un procédé selon la revendication 2, selon lequel ledit produit, avant le vieillissement, est immergé dans l'acide phosphorique dilué à la température ambiante sous une tension anodique appliquée d'environ 350 à 600 V pendant un temps allant jusqu'à environ 1 h, pour intensifier la performance isolante dudit film.

4. Un procédé selon la revendication 1, selon lequel l'article métallique est nettoyé par dégraissage au moyen d'un solvant organique et trempage de l'article dans un acide fort.

5. Un procédé selon la revendication 4, comprenant en outre le gravure électrochimique dans une solution d'acide fluorhydrique à une tension anodique appliquée pour éliminer les impuretés incrustées dans la surface de l'article métallique.

6. Un procédé selon la revendication 1, selon lequel le sel inorganique de lithium contenant de l'oxygène est choisi parmi le nitrate de lithium, un mélange de nitrate de lithium et de nitrate de potassium et un mélange de nitrate de lithium et d'hydroxyde de lithium.

7. Un procédé selon la revendication 1, selon lequel la température de la masse fondue est contrôlée en premier lieu à une valeur supérieure à 500°C, avec une tension anodique appliquée comprise dans l'intervalle d'environ 3 V à 30 V pendant environ 0,1 à 10 h pour former un film plus épais; puis la température de la masse fondue est changée à une température comprise dans l'intervalle de 440°C à 460°C, avec une tension appliquée comprise dans l'intervalle d'environ 35 V à 45 V pendant environ 2 à 4 h pour former la portion extérieure du film.

8. Un procédé selon la revendication 1, selon lequel la température de la masse fondue est contrôlée en premier lieu à environ 440°C à 460°C, avec une tension anodique appliquée comprise dans l'intervalle d'environ 35 V à 45 V pendant environ 2 à 4 h, puis, la température de la masse fondue est changée à une température supérieure à 500°C, avec une tension anodique appliquée comprise entre environ 3 V et 30 V pendant environ 0,1 à 10 h pour former la portion extérieure du film.

9. Un procédé selon la revendication 1, selon lequel ledit article est une filière.

10. Un procédé selon la revendication 9, selon lequel la filière est réalisée en tantale, et le procédé comprend également la gravure électrochimique de la surface de la filière en tantale par immersion dans une solution contenant l'acide fluorhydrique avec une tension anodique appliquée pour éliminer une couche superficielle et élargir le diamètre des trous capillaires de la filière et ensuite le contrôle de la température de la masse fondue à une température comprise dans l'intervalle d'environ 430°C à 580°C avec une tension anodique appliquée comprise dans l'intervalle d'environ 3 V à 40 V.

11. Un procédé selon la revendication 10, selon lequel ladite gravure électrochimique est conduite avec ladite solution à environ 39°C et avec une tension anodique appliquée d'environ 2 à 5 V.

12. Un procédé selon la revendication 10, comprenant en outre une étape de post-traitement pour éliminer le revêtement de film sur la face de sortie de la filière pour exposer le tantale métallique.

13. Un procédé selon la revendication 2, selon lequel ledit article est un élément élastique en tantale.

14. Un procédé selon la revendication 1, selon lequel ledit article est une plaque de condensateur en tantale munie du film d'oxyde-formé comme diélectrique.

15. Un procédé selon la revendication 1, selon lequel ledit article est un substrat de tantale d'un élément détecteur de rayons X ou d'un élément détecteur thermique.

16. Un procédé selon la revendication 1, selon lequel lesdits articles sont des réacteurs, des composants de valves et des parties de pompe utilisés dans l'industrie pétrochimique.